Europäisches Patentamt

European Patent Office

Office européen des brevets

(11) Numéro de publication : **0 214 036**
**B1**

(12) **FASCICULE DE BREVET EUROPÉEN**

(45) Date de publication du fascicule du brevet :·
09.11.88

(51) Int. Cl.⁴ : **F 16 G 11/04, E 04 C 5/12**

(21) Numéro de dépôt : **86401797.5**

(22) Date de dépôt : **11.08.86**

(54) **Perfectionnement aux mors tronconiques d'ancrage pour câbles et à leurs procédés de fabrication.**

(30) Priorité : **12.08.85 FR 8512290**

(43) Date de publication de la demande :
**11.03.87 Bulletin 87/11**

(45) Mention de la délivrance du brevet :
**09.11.88 Bulletin 88/45**

(84) Etats contractants désignés :
**AT BE CH DE GB IT LI NL SE**

(56) Documents cités :
**FR-A- 2 524 030**
**FR-E- 47 414**
**GB-A- 958 284**
**GB-A- 1 052 776**

(73) Titulaire : **FREYSSINET INTERNATIONAL (STUP)**
**Zone d'activités des Marais 28, rue des Osiers**
**F-78310 Coignières (FR)**

(72) Inventeur : **Savall, José**
**12, rue Maurice Genevoix**
**F-28000 Chartres (FR)**
Inventeur : **Amelot, Bernard**
**5, rue Pasteur**
**F-28230 Epernon (FR)**
Inventeur : **Parmentier, Claude**
**55, rue de la Madeleine**
**F-28230 Epernon (FR)**

(74) Mandataire : **Behaghel, Pierre et al**
**CABINET PLASSERAUD 84 rue d'Amsterdam**
**F-75009 Paris (FR)**

EP 0 214 036 B1

## Description

L'invention est relative aux mors tronconiques fendus destinés à ancrer sur des blocs de retenue des câbles tels que ceux destinés à engendrer une précontrainte sur un ouvrage en béton ou à haubaner un pont, ces mors étant propres à enserrer ces câbles et à coagir avec des logements présentant au moins une portion tronconique complémentaire, logements évidés de part en part dans lesdits blocs.

Les mors en question sont composés de deux, trois ou quatre éléments identiques — appelés « clavettes » ci-après — provenant chacun d'une pièce d'origine délimitée extérieurement par une surface tronconique et évidée par un canal axial cylindrique dont la face intérieure est avantageusement striée, ladite pièce d'origine étant décomposée en lesdites clavettes par sciage selon deux, trois ou quatre demi-plans radiaux (GB-A-958 284).

Dans les modes de réalisation connus des mors ci-dessus, les clavettes obtenues par sciage sont recueillies en vrac.

Puis elles sont soumises à un traitement thermique de durcissement superficiel et, pour former un mors, on prélève parmi les clavettes ainsi traitées le nombre requis — généralement trois — de celles-ci et on les assemble à l'aide d'un jonc annulaire en acier logé dans une gorge circulaire elle-même évidée dans la face tronconique externe de la pièce d'origine, au voisinage de sa grande base.

Cette formule d'assemblage présente certains inconvénients et en particulier le suivant.

En raison du mélange en vrac des clavettes entre leur fabrication par sciage et leur prélèvement individuel consécutif au traitement de durcissement, les clavettes prélevées pour constituer chaque mors ne proviennent généralement pas de la même pièce d'origine.

Cette circonstance ne porterait pas à conséquence si toutes les clavettes étaient rigoureusement identiques.

Mais ce n'est pas le cas pour les fabrications industrielles en grande série car alors les traits de sciage ne sont pas toujours rigoureusement axiaux et radiaux et leurs écartements angulaires mutuels ne sont pas toujours rigoureusement égaux entre eux.

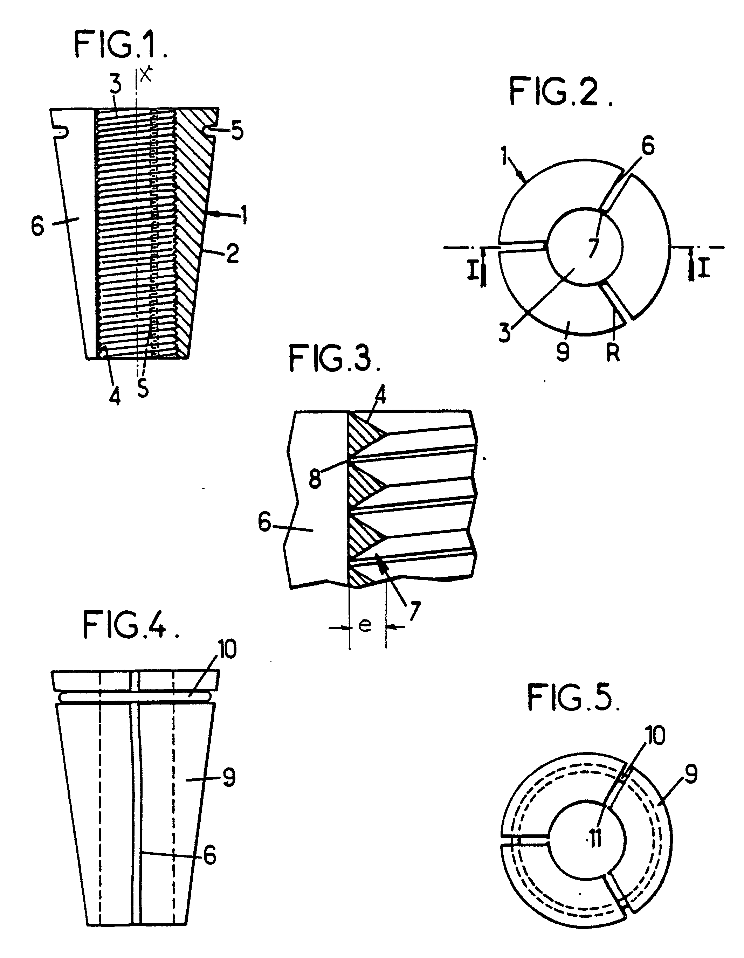

C'est ainsi que la découpe de la pièce d'origine peut présenter la forme sinueuse visible en S sur la figure 1 ou s'étendre selon des plans inclinés sur les plans radiaux idéals, comme visible en R sur la figure 2.

Dans ce cas, le serrage des mors considérés ne conduit pas à des juxtapositions parfaites plan sur plan des faces latérales des clavettes contiguës : la juxtaposition de ces clavettes reconstitue un canal cylindrique très imparfait, avec formation de vides excessifs et irréguliers entre les clavettes et éventuellement création de décrochements au niveau de leurs raccordements, ce qui peut engendrer des contraintes locales élevées susceptibles de provoquer la rupture ou le glissement des câbles à ancrer.

Pour éviter cet inconvénient, on doit imposer des contrôles et tolérances de fabrication sévères et donc coûteux pour la fabrication des clavettes.

L'invention a essentiellement pour but de remédier à l'inconvénient signalé d'une manière particulièrement économique puisqu'elle permet de supprimer les contrôles signalés.

A cet effet les mors d'ancrage selon l'invention sont essentiellement caractérisés en ce que la totalité des clavettes qui composent chacun d'eux proviennent de la même pièce d'origine, les sciages destinés à décomposer cette pièce en clavettes étant demeurés volontairement incomplets de façon à laisser subsister des pontets de liaison de faible épaisseur entre les clavettes contiguës le long du canal central de ladite pièce.

Le procédé de fabrication desdits mors est quant à lui essentiellement caractérisé par la suite des opérations suivantes : sciage de la pièce d'origine selon des saignées sensiblement axiales et radiales conduit de façon à laisser subsister des pontets de faible épaisseur au fond de ces saignées le long du canal central, pontets maintenant les clavettes réunies entre elles et traitement de la pièce ainsi tailladée propre à durcir superficiellement les clavettes tout en fragilisant les pontets.

Dans des modes de réalisation préférés, on a recours en outre à l'une et/ou à l'autre des dispositions suivantes :

- un jonc d'assemblage en acier est monté dans la gorge annulaire de la pièce après son sciage et avant le traitement de durcissement,

- les pontets ont une épaisseur radiale inférieure ou égale à 1 mm,

- la surface cylindrique intérieure du canal est striée et les pontets sont discontinus, étant évidés radialement au niveau des creux des stries.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Les figures 1 et 2, de ce dessin, montrent respectivement en coupe axiale selon I-I figure 2, et en vue en bout l'ébauche d'un mors conforme à l'invention telle qu'elle se présente après sciage de la pièce d'origine et avant pose du jonc.

La figure 3 montre à plus grande échelle une portion de la figure 1.

Les figures 4 et 5 montrent respectivement en vue latérale et en vue en bout le mors obtenu selon l'invention à partir de l'ébauche ci-dessus.

Pour réaliser un tel mors, on part d'une façon connue en soi d'une pièce 1 — dite « pièce d'origine » dans le présent texte — délimitée extérieurement par une surface tronconique 2 et évidée axialement par un canal cylindrique 3.

La surface interne de ce canal est striée en 4 selon notamment un filet hélicoïdal à section triangulaire.

Une gorge annulaire 5 est en outre évidée dans la face tronconique 2 au voisinage de sa grande base.

La pièce 1 en question est avantageusement constituée en un acier doux facilement usinable mais susceptible d'être durci superficiellement par un traitement thermique tel qu'une cémentation.

C'est dans cette pièce 1 que l'on pratique par sciage des saignées minces 6 s'étendant selon des plans passant par l'axe X de ladite pièce.

Dans le mode de réalisation préféré illustré, ces saignées 6 sont au nombre de trois et écartées angulairement entre elles de 120° autour de l'axe X.

Les saignées 6 ne sont pas évidées intégralement dans la pièce 1 : chacune d'elles est interrompue de façon à laisser subsister le long du canal central 3 un pontet 7 tout le long de ce canal.

L'épaisseur radiale e de chaque pontet 7 est très faible étant de préférence inférieure à 1 mm, par exemple de l'ordre de 0,3 à 0,7 mm, lorsque les éléments à ancrer par les mors concernés sont des torons présentant un diamètre de l'ordre de 15 mm.

La profondeur des stries 4 peut être supérieure à ladite épaisseur e : les pontets 7 sont alors interrompus au niveau des creux de ces stries 4 par des lumières 8 (figure 3) se présentant sous la forme de pointillés.

Il est à noter que, malgré la petitesse de l'épaisseur e, il est relativement facile de régler le sciage en conséquence vu que l'obtention des trois saignées 6 peut être exécutée simultanément à l'aide de trois fraises minces dont les dimensions et positions respectives sont rigoureusement déterminées et entre lesquelles la pièce 1 est forcée axialement.

L'ébauche de mors ainsi tailladée demeure constituée d'un seul bloc ou « monolithe » et peut être mélangée en vrac à d'autres ébauches semblables.

Les sollicitations exercées sur les pontets 7 à ce stade sont en effet très inférieures à celles qui seraient nécessaires pour rompre lesdits pontets, lesquels n'ont pas encore été fragilisés par cémentation et ont alors essentiellement pour mission de conserver une liaison entre les clavettes à former 9.

On reprend ensuite une à une les ébauches monobloc qui ne sont pas encore divisées en clavettes distinctes de façon à placer un jonc d'assemblage 10 dans chaque gorge 5, jonc généralement constitué en acier à ressort.

On fait alors subir à l'ensemble le traitement de cémentation qui conduit au durcissement superficiel des clavettes 9 et des pontets 7.

Ce traitement est notamment un chauffage à une température comprise entre 900 et 1 000 °C réalisé pendant trois quarts d'heure dans une atmosphère carburante, chauffage suivi d'une trempe.

L'acier ainsi traité est alors devenu superficiellement très dur et les pontets sont devenus relativement fragiles et cassants.

La simple prise en mains de l'ensemble à ce stade suffit pour casser lesdits pontets 7, lesquels se trouvent alors brisés en petits fragments.

Cette casse, qui ne laisse subsister que les racines 11 desdits pontets, racines comparables à des bavures non ébarbées, libère les clavettes 9 constitutives du mors les unes par rapport aux autres.

Mais cette libération ne risque plus de séparer totalement ces clavettes vu la présence du jonc 10.

Il est à noter que la présence des bavures résiduelles 11 est avantageuse vu qu'au début du serrage du mors ces bavures maintiennent les clavettes mutuellement écartées les unes des autres, ce qui empêche leur rassemblement angulaire dissymétrique se traduisant par la création d'une fente trop large.

Lors du serrage subséquent, ces bavures ne sont pas gênantes vu qu'elles sont alors écrasées et brisées en formant de petits éclats.

Les clavettes 9 constituant les mors ainsi fabriqués présentent l'important avantage de provenir de la même pièce d'origine de sorte qu'elles se juxtaposent latéralement selon des contacts intimes entre surfaces complémentaires jointives, les surfaces juxtaposées présentant exactement les mêmes irrégularités (sinuosités, défauts d'orientation, de position angulaire, ...) et que leur juxtaposition reconstitue exactement le canal cylindrique désiré.

Ce résultat est obtenu même pour des irrégularités relativement importantes observées sur les tracés, orientations et positions des traits de scie, ce qui permet de réduire dans des proportions considérables l'importance et le coût des contrôles relatifs aux opérations de sciage.

En suite de quoi, et quel que soit le mode de réalisation adopté, on dispose finalement de mors d'ancrage dont la constitution, la fabrication et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés : elle en embrasse, au contraire, toutes les variantes, notamment celles où le nombre des pontets 7 subsistant entre les clavettes 9 à la fin des opérations de sciage serait inférieur d'une unité au nombre des saignées 6 effectuées au cours de ces opérations de sciage, et celles où, les pontets étant suffisamment épais pour assurer provisoirement la liaison mutuelle des clavettes mêmes après leur durcissement, le jonc d'assemblage serait monté sur la pièce tronconique après le traitement de durcissement et non avant celui-ci.

## Revendications

1. Mors tronconique fendu destiné à l'ancrage d'un câble, caractérisé en ce que la totalité des clavettes (9) qui le composent proviennent de la même pièce d'origine (1) délimitée extérieurement par une surface tronconique (2) et évidée par un canal axial cylindrique (3) dont la face intérieure est avantageusement striée (en 4), les sciages destinés à décomposer ladite pièce (1) en clavettes (9) étant demeurés volontairement incomplets de façon à laisser subsister initialement des pontets de liaison (7) de faible épaisseur entre ces clavettes le long du canal central, pontets rompus ultérieurement.

2. Mors d'ancrage selon la revendication 1, caractérisé en ce que les pontets (7) ont une épaisseur radiale inférieure ou égale à 1 mm.

3. Mors d'ancrage selon l'une quelconque des revendications 1 et 2, pour lequel la surface cylindrique intérieure du canal est striée, caractérisé en ce que les pontets (7) sont discontinus, étant évidés radialement au niveau (8) des creux des stries (4).

4. Ebauche d'un mors tronconique fendu selon l'une quelconque des précédentes revendications, caractérisée en ce qu'elle est constituée par une pièce (1) délimitée extérieurement par une surface tronconique (2) et évidée par un canal axial cylindrique (3) dont la face intérieure est avantageusement striée (en 4), cette pièce étant évidée par des saignées (6) sensiblement radiales laissant uniquement subsister des pontets de liaison (7) de faible épaisseur le long du canal central.

5. Procédé de fabrication d'un mors selon l'une quelconque des revendications 1 à 3 à l'aide d'une ébauche selon la revendication 4, caractérisé par la suite des opérations suivantes : sciage de la pièce d'origine (1) selon des saignées (6) sensiblement axiales et radiales conduit de façon à laisser subsister des pontets (7) de faible épaisseur au fond de ces saignées le long du canal central (3), pontets maintenant les clavettes (9) réunies entre elles, et traitement de la pièce ainsi tailladée propre à durcir superficiellement les clavettes (9) tout en fragilisant les pontets.

6. Procédé de fabrication selon la revendication 5, caractérisé en ce qu'un jonc d'assemblage en acier (10) est monté dans une gorge annulaire (5) de la pièce d'origine après son sciage et avant le traitement de durcissement.

## Claims

1. Split frustoconic jaw intended for the anchoring of a cable, characterized in that the totality of the keys (9) which compose it come from the same original part (1) bounded externally by a frustoconic surface (2) and hollowed by a cylindrical axial channel (3) whose inner surface is advantageously striated (in 4), the sawings intended to decompose said part (1) into keys (9) having remained intentionally incomplete so as to leave subsisting initially connection bridges (7) of small thickness between these keys along the central channel, said bridges being subsequently broken.

2. Anchoring jaw according to claim 1, characterized in that the bridges (7) have a radial thickness less than or equal to 1 mm.

3. Anchoring jaw according to any one of claims 1 and 2, for which the inner cylindrical surface of the channel is striated, characterized in that the bridges (7) are discontinuous, being hollowed radially at the level (8) of the hollows of the striate (4).

4. Blank for a split frustoconic jaw according to any one or the preceding claims, characterized in that it is constituted by a part (1) bounded externally by a frustoconic surface (2) and hollowed by a cylindrical axial channel (3) whose inner surface is advantageously striated (in 4), said part being hollowed by substantially radial cuts (6) allowing only linking bridges (7) of small thickness to subsist along the central channel.

5. Method of manufacturing a jaw according to any one of claims 1 to 3, by means of a blank according to claim 4, characterized by the following sequence of operations : sawing the original part (1) in substantially axial and radial cuts (6) performed so as to allow bridges (7) to subsist of small thickness at the bottom of these cuts along the central channel (3), said bridges holding the keys (9) joined together, and treatment of the thus cut-off part suitable for surface hardening of the keys (9) whilst making the bridges fragile.

6. Method or manufacture according to claim 5, characterized in that an assembly ring (10) of steel is mounted in an annular groove (5) of the original part after its sawing and before the hardening treatment.

## Patentansprüche

1. Geschlitztes, kegelstumpfförmiges Kopfstück zur Verankerung eines Kabels, dadurch gekennzeichnet, daß alle das Kopfstück bildenden Keilelemente (9) aus einem gemeinsamen Ursprungsteil (1) gebildet sind, welches außen durch eine kegelstumpfförmige Oberfläche (2) begrenzt ist und welches eine durch einen axialen zylindrischen Kanal (3) gebildete Ausnehmung aufweist, deren Innenfläche vorzugsweise geriffelt ist (bei 4), wobei die das Ursprungsstück (1) in Keilstücke (9) teilenden Einschnitte vorsätzlich nicht durchgehend sind, so daß zunächst Verbindungsbrücken (7) geringer Stärke zwischen den Keilstücken entlang des zentralen Kanals stehenbleiben, die später durchgebrochen werden.

2. Verankerungs-Kopfstück nach Anspruch 1, dadurch gekennzeichnet, daß die Verbindungsbrücken eine radiale Dicke haben, die kleiner oder gleich 1 mm ist.

3. Verankerungs-Kopfstück nach einem der Ansprüche 1 und 2, bei welchem die zylindrische Innenfläche des Kanals geriffelt ist, dadurch gekennzeichnet, daß die Verbindungsbrücken (7) unterbrochen sind, indem sie in radialer Richtung am Niveau (8) des Grundes der Riffelung (4) abgearbeitet sind.

4. Rohling für ein geschlitztes, kegelstumpfförmiges Kopfstück nach einem der vorstehenden Ansprüche, dadurch gekennzeichnet, daß er durch ein außen durch eine kegelstumpfförmige Oberfläche (2) begrenztes und mit einer als axialer zylindrischer Kanal (3) ausgebildeten Ausnehmung versehenes Teil (1) gebildet ist, wobei die Innenfläche der Ausnehmung vorzugsweise geriffelt ist (bei 4), und wobei das Teil im wesentlichen radiale Schlitze (6) aufweist, die nur Verbindungsbrücken (7) von geringer Stärke entlang des zentralen Kanals stehenlassen.

5. Verfahren zur Herstellung eines Kopfstückes nach einem der Ansprüche 1 bis 3 unter Verwendung eines Rohlings gemäß Anspruch 4, gekennzeichnet durch folgende nacheinander durchgeführte Verfahrensschritte : Einschneiden des Ursprungsteils (1) entsprechend im wesentlichen axialen und radialen Schlitzen (6) derart, daß Brücken (7) geringer Stärke auf dem Grund dieser Schlitze entlang des zentralen Kanals (3) stehenbleiben, wobei diese Brücken die Keilelemente (9) miteinander verbunden halten, sowie Behandeln des so geschlitzten Teils in der Weise, daß die Keilelemente (9) oberflächengehärtet werden und die Brücken gleichzeitig spröde werden.

6. Verfahren zur Herstellung gemäß Anspruch 5, dadurch gekennzeichnet, daß ein Montagering (10) aus Stahl in eine Ringnut (5) des Ursprungsteils nach dem Schlitzen und vor dem Härtebehandeln desselben eingelegt wird.

FIG.1.

FIG.2.

FIG.3.

FIG.4.

FIG.5.